# EUROPEAN PATENT APPLICATION

(11) **EP 2 426 970 A1**
(43) Date of publication of application: **07.03.2012**
(21) Application number: 09844495.3
(22) Date of filing: 11.05.2009
(51) Int. Cl.: H04W 16/00

(54) **A METHOD FOR SHARING RF RECEIVING UNIT, APPARATUS AND SYSTEM THEREOF**

(71) Applicant: Huawei Technologies Co. Ltd., Shenzhen, Guangdong 518129 (CN)
(72) Inventor: DUAN, Jianguo, 518129, Shenzhen (CN); ZHOU, Yuefeng, 518129, Shenzhen (CN); ZHENG, Meihua, 518129, Shenzhen (CN); GU, Jian, 518129, Shenzhen (CN)
(74) Representative: Kreuz, Georg Maria
(86) International application number: PCT/CN2009/071730
(87) International publication number: WO 2010/130080

(57) **Abstract**

A method, an apparatus, and a system for sharing radio frequency receiving unit are disclosed. The method includes: setting receive frequency band of radio frequency receiving unit of a DBB FDD system and a GSM system to a wideband frequency receiving, where the wideband frequency covers the receive frequency bands of the DBB FDD system and the GSM900 system; and receiving signals of both the DBB FDD system and the GSM900 system using a dual-polarized broadband antenna inside a base station, wherein a frequency band of the dual-polarized broadband antenna is the same as the frequency band of the wideband frequency.. With the present invention, the two systems can receive the same downlink signals inside the base station by using only one dual-polarized broadband antenna (with a band of 790 MHz to 960 MHz), without a diplexer, which avoids an extra transmit/receive loss.

## Description

### FIELD OF THE INVENTION

The present invention relates to the mobile communications field, and in particular, to a method, an apparatus, and a system for sharing radio frequency receiving unit.

### BACKGROUND OF THE INVENTION

In a current wireless spectrum plan, frequency band conversion is stipulated to be performed to free some frequency band resources. For example, in a European wireless spectrum plan, it is stipulated that a 400 MHz frequency band of an analog television needs to be converted into a digital Television. Therefore, a large band is freed. This band is called a digital dividend band (Digital Divideng Band, DDB), in which some bands of 790 MHz to 862 MHz are determined to be used in a wireless mobile communication system and are mainly applicable to a frequency division duplex (Frequency Division Duplexer, FDD) standard. Generally, with respect to an FDD frequency band, a downlink band is in a higher band, and an uplink band is in a lower band. For example, in a Global System for Mobile Communications (Global System for Mobile Communications, GSM) 900 MHz system, the uplink (Up Link) band is 890 MHz to 915 MHz; and the downlink (Down Link) band is 935 MHz to 960 MHz; the uplink band of an extended GSM900 system is 880 MHz to 915 MHz. Based on practical applicability to a user, a system using the DDB band and the FDD standard preferentially covers a remote area, while the GSM900 system is a network system with higher coverage penetration in the existing network. Therefore, sharing between the system using the DBB and the FDD standard and the GSM900 system will become a mainstream application mode.

The sharing between the system using the DBB and the FDD standard (hereinafter referred to as the DBB FDD system for short) and the GSM900 system may be implemented in two modes. In the first mode, a feeder is shared and an antenna is not shared, and the sharing of the feeder or antenna may be implemented by using a co-directional system diplexer (Diplexer). In the prior art, to implement sharing of feeders between different systems, dual-polarized antennas may be used. The diplexer is connected to combine the feeder and antennas; on an upper side of a base station, the combined circuits are split by using the diplexer to carry out the receiving of downlink signals of the two systems. In the second mode, both the feeder and the antenna are shared. In this mode, signals from antenna and feeder may be directly sent by using two feeders; these two feeders are split by using a diplexer on the upper side of the base station. In this way, a dual-transmission and dual-receiving function of each system is implemented.

### SUMMARY OF THE INVENTION

Embodiments of the present invention provide a method and an apparatus for sharing radio frequency receiving unit, so that sharing between a DBB FDD system and a GSM900 system can be implemented without using a diplexer.

To solve the preceding technical problem, an embodiment of the present invention provides a method for sharing radio frequency receiving unit, including:
setting receive frequency band of radio frequency receiving unit of a DBB FDD system and a GSM system to a wideband frequency receiving, wherein the wideband frequency covers the receive frequency bands of the DBB FDD system and the GSM900 system; and
receiving signals of both the DBB FDD system and the GSM900 system using a dual-polarized broadband antenna inside a base station, wherein a frequency band of the dual-polarized broadband antenna is the same as the frequency band of the wideband frequency.

An embodiment of the present invention provides an apparatus for sharing radio frequency receiving unit, including:
a first setting module, configured to set receive frequency band of radio frequency receiving unit of a DBB FDD system and a GSM system to a wideband frequency receiving, wherein the wideband frequency covers the receive frequency band of the DBB FDD system and the GSM system; and
a receiving module, configured to receive signals of both the DBB FDD system and the GSM system using a dual-polarized broadband antenna inside a base station, wherein a frequency band of the dual-polarized broadband antenna is the same as the frequency band of the wideband.

An embodiment of the present invention provides a system for sharing radio frequency receiving unit, including:
a sending apparatus, configured to send signals of a DBB FDD system and a GSM system to a sharing apparatus; and
the sharing apparatus is configured to set receive frequency band of radio frequency receiving unit of the DBB FDD system and the GSM system to a wideband frequency receiving, wherein the wideband frequency covers the receive frequency band of the DBB FDD system and the GSM system; and receive both the signals using a dual-polarized broadband antenna inside a base station, wherein a band of the dual-polarized broadband antenna is the same as the frequency band of the wideband.

Embodiments of the present invention have the following advantageous effects:

In embodiments of the present invention, the receive frequency band of the radio frequency receiving unit of the DBB FDD system and the GSM system are set to wideband frequency receiving, where the wideband frequency covers the receive frequency bands of the DBB FDD system and the GSM900 system. Because the receive frequency bands of the two systems are set to the same wideband frequency, downlink signals of the DBB FDD system and the GSM900 system are uniformly received by using a single dual-polarized broadband antenna inside a base station, where the frequency band of the dual-polarized broadband antenna is the same as the frequency band of the wideband. In embodiments of the present invention, both the two systems receive the downlink signals inside one base station by using only one dual-polarized broadband antenna (with a frequency band of 790 MHz to 960 MHz), without a diplexer, which avoids an additional transmit/receive loss.

### BRIEF DESCRIPTION OF THE DRAWINGS

To make technical solutions in an embodiment of the present invention or in a prior art clearer, the accompanying drawings for illustrating the embodiments or the prior art are described briefly below. Apparently, the accompanying drawings are exemplary only, and a person skilled in the art can derive other drawings from such accompanying drawings without creative efforts.

FIG 1 is a flowchart of a method for sharing radio frequency receiving unit according to a first embodiment of the present invention;

FIG 2 is a flowchart of a method for sharing radio frequency receiving unit according to a second embodiment of the present invention;

FIG 3 is a flowchart of a method for sharing radio frequency receiving unit according to a third embodiment of the present invention;

FIG 4 is a schematic structural diagram of an apparatus for sharing radio frequency receiving unit according to a first embodiment of the present invention;

FIG 5 is a schematic structural diagram of an apparatus for sharing radio frequency receiving unit according to a second embodiment of the present invention;

FIG 6 is a schematic structural diagram of an apparatus for sharing radio frequency receiving unit according to a third embodiment of the present invention; and

FIG 7 is a schematic structural diagram of a system for sharing radio frequency receiving unit according to an embodiment of the present invention.

### DETAILED DESCRIPTION OF THE EMBODIMENTS

The technical solutions of the present invention are described in detail with reference to the accompanying drawings. Apparently, the embodiments are exemplary only and the present invention is not limited to such embodiments. A person skilled in the art can derive other embodiments from the embodiments given herein without making any creative effort, and all such embodiments are covered in the protection scope of the present invention.

Analyzing the scheme described in the background of the invention, because the number of feeder egresses is still four, four feeders are needed, which are the same as those required for two independent dual-polarized antennas. In this case, to reduce the number of feeders, a diplexer is added on an uplink and a downlink respectively or a diplexer is added on the downlink, and a corresponding jumper and connector are added at the meantime. However, the use of the diplexer also increases insertion losses of the uplink and downlink and does not reduce the number of antennas. Consequently, coexistence of these two FDD systems will cause overlapping between an uplink band and a downlink band; and device sharing cannot be performed efficiently. This solution adds an extra link loss and a cost of the diplexer, and therefore has a lot of weaknesses in a practical application.

The following further describes the embodiments of the present invention in detail with reference to the accompanying drawings and detailed embodiments.

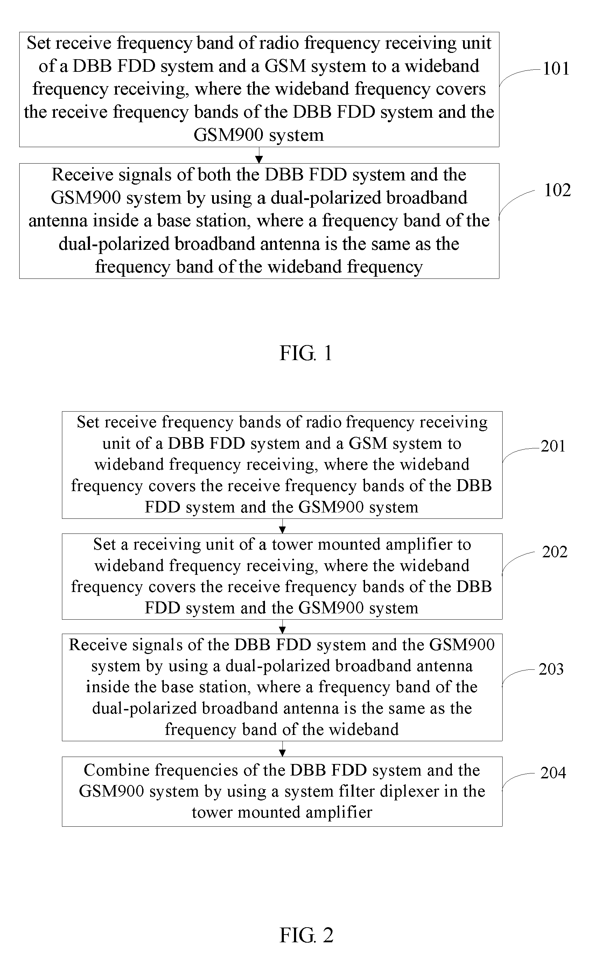

As shown in FIG 1, in a first embodiment of the present invention, implementing a method provided in the first embodiment of the present invention may include the following steps:

Step 101: Set receive frequency band of radio frequency receiving unit of a DBB FDD system and a GSM system to a wideband frequency receiving. For example, the wideband frequency is set to cover the receive frequency bands of the DBB FDD system and the GSM900 system.

The receive frequency band of the DBB FDD system is generally 832 MHz to 862 MHz, while the receive frequency band of the GSM900 system is generally 880 MHz to 915 MHz. If wideband frequency receiving is implemented on these two systems, the receive frequency bands of the radio frequency receiving unit of these two systems may be set to a frequency band of 832 MHz to 915 MHZ, which covers the uplink frequency bands of the GSM900 system and the DDB800 system. For example, if wideband frequency receiving is implemented on a radio remote unit (Radio Remote Unit, RRU), a dual-mode RRU may be integrated into a hardware, so that compatibility of a receive circuit and a digital intermediate frequency circuit may be implemented. It should be noted that no sharing requirement according to the embodiments of the present invention is imposed on an analog transmit circuit, especially a power amplifier.

In addition, preferably, considering that a transmitting unit includes a power amplifier which transmits a strong signal, to avoid spurious emission or leakage of transmit power, or interference on a receiving system and other systems, the two systems use independent power amplifier and respective transmit frequency band filters, so that the spurious emission or power leakage in power transmission can comply with the requirement of related protocol.

Step 102: Receive signals of both the DBB FDD system and the GSM900 system by using one dual-polarized broadband antenna inside a base station, where a frequency band of the dual-polarized broadband antenna is the same as the frequency band of the wideband frequency.

In general, two antennas are needed in a macro base station system. When they come into the base station, two hardware circuits are also needed to receive signals from different paths. In this embodiment of the present invention, because the receiving of the two systems is set to wideband frequency receiving in step 101, a dual-polarized broadband antenna may be used to uniformly receive downlink signals of both the DBB FDD system and the GSM system. The frequency band of the dual-polarized broadband antenna may be the same as the frequency band of the wideband, i.e. 790 MHz to 960 MHz; this frequency band includes a transmit frequency of 792 MHz to 822 MHz of the DDB800, a transmit frequency of 925 MHz to 960 MHz of the GSM900 system, and the same receive wideband frequency of 832 MHz to 915 MHz of the two systems. In this way, one dual-polarized broadband antenna may be used to implement sharing of the radio frequency receiving unit of the two systems.

In this embodiment, by using a feature of receiving with the same frequency band, independent radio frequency receiving units of the two systems are combined. After the radio frequency receiving units are combined and integrated, a receive circuit, a power supply, and other related hardware may be shared, only transmit analog branches of the two systems may be remained, and one dual-polarized broadband antenna can be used to implement co-site transceiving of the two systems and maximum sharing of the radio frequency receiving unit. Compared with radio frequency receiving units of two independent systems, sharing of hardware is further implemented and cost is reduced.

In this embodiment of the present invention, the two systems can receive the same downlink signals inside the base station by using only one dual-polarized broadband antenna (with a frequency band of 790 MHz to 960 MHz), without a diplexer, which avoids an extra transmit/receive loss. The sharing of radio frequency receiving unit described in this embodiment may be implemented between any entities that include a radio frequency receiving unit so as to share the receive frequency bands of the DBB FDD system and the GSM system. Therefore, the downlink signals of the DBB FDD system and the GSM900 system may be received uniformly by using an independent dual-polarized broadband antenna. The frequency band of the dual-polarized broadband antenna is the same as the frequency band of the wideband.

As shown in FIG 2, in a second embodiment of the present invention, implementing a method provided in the first embodiment of the present invention may include the following steps:

Step 201: Set receive frequency bands of radio frequency receiving unit of a DBB FDD system and a GSM system to wideband frequency receiving, where the wideband frequency covers the receive frequency bands of the DBB FDD system and the GSM900 system.

For implementation of Step 201 in this embodiment, refer to description in the first embodiment.

Step 202: Set a receiving unit of a tower mounted amplifier (TMA for short) to wideband frequency receiving, where the wideband frequency includes the receive frequency bands of the DBB FDD system and the GSM900 system.

A base station system provided in this embodiment of the present invention further includes the TMA. A purpose of the TMA is to amplify a weak receive signal and increase access sensitivity. Generally, two paths of receive signals inside a base station need to be amplified. Before or after a receive signal is amplified, the receive signal and a transmit signal need to be split or combined. For example, the signals are split or combined by using a diplexer, so that the receive signal and the transmit signal are concurrently supported in the same feeder. The TMA described in this embodiment may be a dual-mode TMA and may support two transmit/receive channels. The details are as follows: For a DDB800, a frequency band of a transmit channel is 792 MHz to 822 MHz, and a frequency band of a receive channel is 832 MHz to 915 MHz; for the GSM900 system, a frequency band of a transmit channel is 925 MHz to 960 MHz, and a frequency band of a receive channel is 832 MHz to 915 MHz. The frequency bands of the transmit channels are different and transmit filters in the diplexer are also different, but the receive frequency bands are the same. The dual-mode TMA specifically refers to that two channels are integrated in the TMA, one for transmitting/receiving a signal in a frequency band of the DDB800, and the other for transmitting/receiving a signal in a frequency band of the GSM900 system. When the TMA is applied, the receive channels of the two systems are set to the same band, so that the two systems can receive signals at the same wideband.

Step 203: Receive signals of the DBB FDD system and the GSM900 system by using a dual-polarized broadband antenna inside the base station, where a frequency band of the dual-polarized broadband antenna is the same as the frequency band of the wideband.

The signals of the DBB FDD system and the GSM900 system may be uniformly received by a single dual-polarized broadband antenna inside the base station, where the frequency band of the dual-polarized broadband antenna is the same as the frequency band of the wideband. For detailed description about the dual-polarized broadband antenna, refer to the first embodiment, and therefore no description is provided here.

Further, in this embodiment, the following may also be included:

Step 204: Combine frequencies of the DBB FDD system and the GSM900 system by using a system filter diplexer in the TMA.

In the TMA, a system filter diplexer may be used to combine the frequency band of the GSM system (the transmit frequency band is 935 MHz to 960 MHz, and the receive frequency band is 832 MHz to 915 MHz) and the frequency band of the DDB FDD system (the transmit frequency band is 792 MHz to 822 MHz, and the receive frequency band is 832 MHz to 915 MHz). In addition, the system filter diplexer may further ensure isolation needed by the related protocol. In this embodiment, the DDB FDD system may include a GSM system, a CDMA system, a UMTS, or an LTE system.

In this embodiment, only one dual-polarized broadband antenna is needed to implement sharing of receive branches between the two systems, without an additional diplexer; the radio frequency receiving unit of the two systems can be shared in a base station that includes the TMA, without generating an extra transmit/receive link loss.

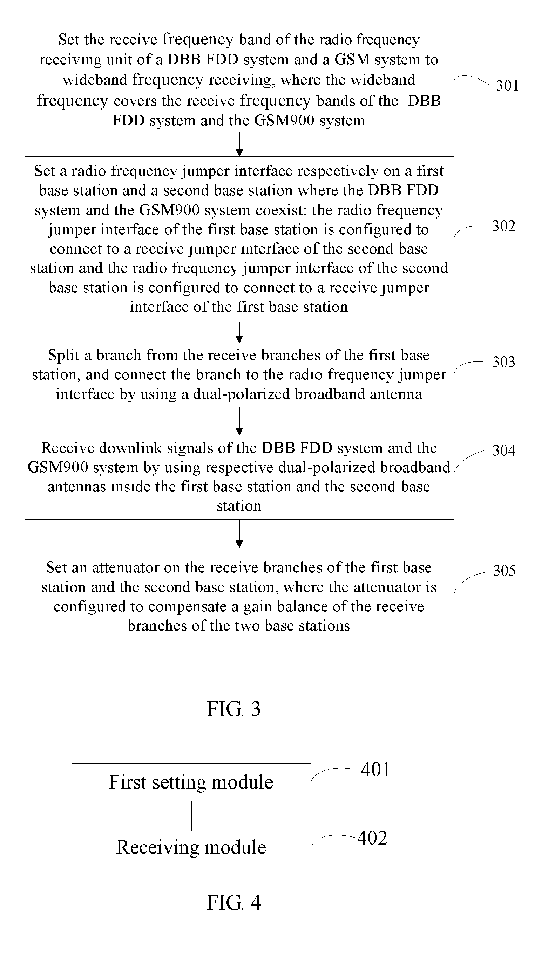

As shown in FIG 3, in a third embodiment of the present invention, implementing a method provided in the third embodiment of the present invention may include the following steps:

Step 301: Set receive frequency band of radio frequency receiving unit of a DBB FDD system and a GSM system to wideband frequency receiving, where the wideband frequency covers the receive frequency bands of the DBB FDD system and the GSM900 system.

Step 302: Set a radio frequency jumper interface respectively on a first base station and a second base station where the DBB FDD system and the GSM900 system coexist, where the radio frequency jumper interface of the first base station is configured to connect to a receive jumper interface of the second base station and the radio frequency jumper interface of the second base station is configured to connect to a receive jumper interface of the first base station.

In this embodiment, mutual diversity receiving between two base stations may be implemented. Normally, a macro base station system implements two-path receiving. For example, two antennas are needed to receive signals from two different paths. Receiving implemented by the two antennas may be called main receiving and diversity receiving. When it comes into the base station, two hardware circuits are needed to receive signals from different paths. In this embodiment, after the same receive frequency band is used, frequency bands of transmit signals are different, and frequency bands of receive signals are the same. Only one of the receive circuits inside the base stations needs to be split for the other base station, so that the systems of the base stations have two receive signals respectively. This may be called mutual diversity.

Step 303: Split a branch from the receive branches of the first base station and connect the branch to the radio frequency jumper interface by using a dual-polarized broadband antenna.

Compared with a conventional base station (or RRU), the base station (or RRU) in this embodiment has an additional external egress of the radio frequency jumper; and circuits in the base station also change accordingly. After a main receive branch undergoes filter amplification, one branch is split by using a splitter and connected to the external egress of the radio frequency jumper, and is further connected to a diversity input of the other base station by using an external jumper.

Step 304: Receive signals of the DBB FDD system and the GSM900 system by using respective dual-polarized broadband antennas inside the first base station and the second base station.

In this embodiment, the mutual diversity receiving is implemented between two base stations through a function of receive jumpers on the base stations. A frequency band supported by the dual-polarized broadband antenna includes 790 MHz to 960 MHz. In this way, co-site intensive construction of single transmission and dual receiving may be implemented on the two base stations respectively by using only two feeders, one pair of dual-polarized antenna, and two jumpers, without a diplexer, which avoids an extra loss due to system sharing.

Step 305: additionally set an attenuator on the receive branches of the first base station and the second base station, where the attenuator is configured to compensate a gain balance of the receive branches of the two base stations.

In addition, after a diversity receive branch undergoes the filter amplification, an interface may be added to connect to a variable or fixed attenuator. If a base station can clearly calculate a gain difference of the two receive circuits, the gain balance of the two receive circuits may be adjusted and controlled by using the variable or fixed attenuator or an attenuation circuit. It should be noted that a receive filter of the diversity receive branch may be restored to cover a normal base station bandwidth instead of covering the receive frequency bands of the two systems. This reduces a proportion of reconstruction on the original systems to some extent. Both the attenuator and the splitter are placed after a low-noise amplifier, which ensures that no great impact is imposed on receive noise of an integrated system.

In this embodiment, inside the GSM and DDB FDD base station systems, one path of signals received in main receiving is split to be used by the other system; the mutual diversity receiving of the two systems is implemented by using jumpers, so that the number of antennas and that of feeders are saved.

It should be noted that for simple description of the methods in the preceding embodiments, the methods are described as combinations of a series of actions. It is understandable to a person skilled in the art that the present invention is not limited by a sequence of the actions. Some steps may be performed in another sequence or at the same time according to the present invention. In addition, it is understandable to a person skilled in the art that the embodiments in the specification are exemplary embodiments and that actions and modules involved in these embodiments are optional for the present invention.

Corresponding to the methods provided in the preceding embodiments, as shown in FIG 4, an embodiment of the present invention further provides an apparatus for sharing radio frequency receiving unit. The apparatus may specifically include a first setting module 401 and a receiving module 402.

The first setting module 401 is configured to set receive frequency bands of radio frequency receiving unit of a DBB FDD system and a GSM system to wideband frequency receiving, where the wideband frequency covers the receive frequency bands of the DDB FDD system and the GSM system.

The apparatus may be implemented by using an independent entity or by using software or a program. The receive frequency band of the DBB FDD system is generally 832 MHz to 862 MHz, while the receive frequency band of the GSM900 system is generally 880 MHz to 915 MHz. If wideband frequency receiving is implemented on these two systems, the receive frequency bands of the radio frequency receiving unit of these two systems may be set to a frequency band of 832 MHz to 915 MHZ, which covers the uplink frequency bands of the GSM900 system and a DDB800 system. For example, if wideband frequency receiving is implemented on a radio remote unit (RRU), a dual-mode RRU may be integrated into hardware, so that compatibility of a receive circuit and a digital intermediate frequency circuit may be implemented. It should be noted that in this embodiment of the present invention, no sharing requirement is imposed on an analog transmit circuit, especially a power amplifier.

In addition, preferably, considering that the transmitting unit includes a power amplifier which transmits a strong signal, to avoid that spurious emission or leakage of transmission may interfere with receiving or other systems, an independent power amplifier and a transmit frequency band filter may be used in the two systems respectively, so that outband spurious emission of transmission can comply with the requirement of related protocol.

The receiving module 402 is configured to receive signals of the DBB FDD system and the GSM system by using a dual-polarized broadband antenna inside a base station, where a frequency band of the dual-polarized broadband antenna is the same as the frequency band of the wideband.

In general, two antennas are needed in a macro base station system. Inside the base station, two hardware circuits are also needed to receive signals from different paths. In this embodiment, because the receiving of the two systems is set to wideband frequency receiving in the setting module 401, a dual-polarized broadband antenna may be used to receive the signals of the DBB FDD system and the GSM system. The frequency band of the dual-polarized broadband antenna is the same as the wideband, for example, 790 MHz to 960 MHz; this frequency band includes a transmit frequency of 792 MHz to 822 MHz of the DDB800, a transmit frequency of 925 MHz to 960 MHz of the GSM900 system, and the same receive wideband frequency of 832 MHz to 915 MHz of the two systems. In this way, one dual-polarized broadband antenna may be used to share the radio frequency receiving unit of the two systems.

In this embodiment, by using a feature of receiving with the same frequency band, independent radio frequency receiving units of the two systems are combined. After the radio frequency receiving units are combined and integrated, a receive circuit, a power supply, and other related hardware may be shared, only transmit analog branches of the two systems may be remained, and one dual-polarized broadband antenna cab be used to implement co-site transceiving of the two systems and maximum sharing of the radio frequency receiving units. Compared with the radio frequency receiving units of two independent systems, sharing of hardware is further implemented and a cost is reduced.

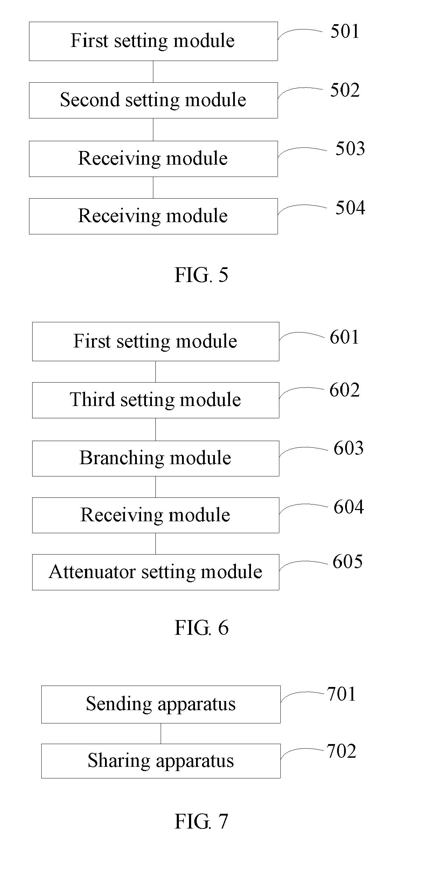

Corresponding to the method in the second embodiment of the present invention, FIG 5 is a structural block diagram of an apparatus for sharing radio frequency receiving unit according to a second embodiment of the present invention. As shown in FIG 5, the apparatus may include: a first setting module 501, a second setting module 502, a receiving module 503, and an executing module 504.

The first setting module 501 is configured to set receive frequency band of radio frequency receiving unit of a DBB FDD system and a GSM system to wideband frequency receiving, where the wideband frequency covers the receive bands of the DBB FDD system and the GSM system.

The second setting module 502 is configured to set a receiving unit of a tower mounted amplifier to wideband frequency receiving, where the wideband frequency covers the receive bands of the DBB FDD system and the GSM system.

A base station system provided in this embodiment of the present invention further includes the TMA. A purpose of the TMA is to amplify a weak receive signal and increase access sensitivity. Generally, two paths of receive signals inside a base station need to be amplified. Before or after a receive signal is amplified, the receive signal and a transmit signal need to be split or combined. For example, the signals are split or combined by using a diplexer, so that the receive signal and the transmit signal are concurrently supported in the same feeder. The TMA described in this embodiment may be a dual-mode TMA and may support two transmit/receive channels. The details are as follows: For a DDB800, a frequency band of a transmit channel is 792 MHz to 822 MHz, and a frequency band of a receive channel is 832 MHz to 915 MHz; for the GSM900 system, a band of a transmit channel is 925 MHz to 960 MHz, and a frequency band of a receive channel is 832 MHz to 915 MHz. The frequency bands of the transmit channels are different and transmit filters in the diplexer are also different, but the receive frequency bands are the same. The dual-mode TMA specifically refers to two channels are integrated in the TMA, one for transmitting/receiving a signal in a frequency band of the DDB800, and the other for transmitting/receiving a signal in a frequency band of the GSM900 system. When the TMA is applied, the receive channels of the two systems are set to the same frequency band, so that the two systems can receive signals at the same frequency band of wideband.

The receiving module 503 is configured to receive signals of both the DBB FDD system and the GSM system by using a dual-polarized broadband antenna inside the base station, where a frequency band of the dual-polarized broadband antenna is the same as the frequency band of the wideband.

The executing module 504 is configured to combine frequencies of the DBB FDD system and the GSM system by using a system filter diplexer in the tower mounted amplifier.

In the tower mounted amplifier, a system filter diplexer may be used to combine the frequency band of the GSM system (the transmit frequency band is 935 MHz to 960 MHz, and the receive frequency band is 832 MHz to 915 MHz) and the frequency band of the DDB FDD system (the transmit frequency band is 792 MHz to 822 MHz, and the receive frequency band is 832 MHz to 915 MHz). In addition, the system filter diplexer may further ensure isolation needed by the related protocol. In this embodiment, the DDB FDD system may include a GSM system, a CDMA system, a UMTS, or an LTE system.

In this embodiment, only one pair of dual-polarized broadband antenna is needed to implement sharing of receive branches of the two systems, without an additional diplexer; the radio frequency receiving units of the two systems can be shared in a base station that includes the tower mounted amplifier, without generating an extra transmit/receive link loss.

Corresponding to the method in the third embodiment of the present invention, FIG 6 is a structural block diagram of an apparatus for sharing radio frequency receiving unit according to the third embodiment of the present invention. As shown in FIG 6, the apparatus may include: a first setting module 601, a third setting module 602, a branching module 603, a receiving module 604, and an attenuator setting module 605.

The first setting module 601 is configured to set receive frequency bands of radio frequency receiving unit of a DBB FDD system and a GSM system to wideband frequency receiving, where the wideband frequency covers the receive frequency bands of the DBB FDD system and the GSM system.

The third setting module 602 is configured to set a radio frequency jumper interface respectively on a first base station and a second base station where the DBB FDD system and the GSM system coexist, where the radio frequency jumper interface is configured to connect to a receive jumper interface of the other base station.

In this embodiment, mutual diversity receiving between two base stations may be implemented. Normally, a macro base station system requires two-path receiving (from two different paths), which needs to be implemented by using two antennas. Receiving implemented by the two antennas may be called main receiving and diversity receiving. When it comes into the base station, two hardware circuits are needed to receive signals from different paths. In this embodiment, after the same receive frequency band is used, frequency bands of transmit signals are different, and frequency bands of receive signals are the same. Only one of the receive circuits inside the base station needs to be split for the other base station, so that the systems of the base stations have two receive signals respectively. This may be called mutual diversity.

The branching module 603 is configured to split a branch from the receive branches of the first base station and connect the branch to the radio frequency jumper interface by using a dual-polarized broadband antenna.

Compared with a conventional base station (or RRU), the base station (or RRU) in this embodiment has an additional external egress of the radio frequency jumper and circuits in the base station also change accordingly. After a main receive branch undergoes filter amplification, one branch is split by using a splitter and connected to the external egress of the radio frequency jumper, and is further connected to a diversity input of the other base station by using an external jumper.

The receiving module 604 is configured to receive signals of the DBB FDD system and the GSM system by using respective dual-polarized broadband antennas inside the first base station and the second base station, where frequency bands of the dual-polarized broadband antennas are the same as the wideband.

In this embodiment, the mutual diversity receiving is implemented between two base stations through a function of receive jumpers on the base stations. A frequency band supported by the dual-polarized broadband antenna includes 790 MHz to 960 MHz. In this way, co-site intensive construction of single transmission and dual receiving may be implemented on the two base stations respectively by using only two feeders, one pair of dual-polarized antenna, and two jumpers, without a diplexer, which avoids an extra loss due to system sharing.

The attenuator setting module 605 is additionally configured to set an attenuator on the receive branches of the first base station and the second base station, where the attenuator is configured to compensate a gain balance of the receive branches of the two base stations.

After a diversity receive branch undergoes the filter amplification, an interface may be added to connect to a variable or fixed attenuator. If a base station can clearly calculate a gain difference of the two receive circuits, the gain balance between of the two receive circuits may be adjusted and controlled by using the variable or fixed attenuator or an attenuation circuit. It should be noted that a receive filter of the diversity receive branch may be restored to cover a normal based station bandwidth instead of covering the receive frequency bands of the two systems. This reduces a proportion of reconstruction on the original systems to some extent. Both the attenuator and the splitter are placed after a low-noise amplifier, which ensures that no great impact is imposed on receive noise of an integrated system.

In this embodiment, inside the GSM and DDB FDD base station systems, one path of signals received in main receiving is split to be used by the other system; the mutual diversity receiving of the two systems is implemented by using jumpers, so that the number of antennas and that the number of feeders are saved.

Corresponding to the methods and apparatuses in the preceding embodiments, an embodiment of the present invention further provides a system for sharing radio frequency receiving unit. As shown in FIG 7, the system may include:
a sending apparatus 701, configured to send signals of a DBB FDD system and a GSM system to a sharing apparatus; and
the sharing apparatus 702, configured to set receive frequency bands of radio frequency receiving unit of the DBB FDD system and the GSM system to wideband frequency receiving, where the wideband frequency covers the receive frequency bands of the DDB FDD system and the GSM900 system; and receive signals by using a single dual-polarized broadband antenna inside a base station, where a frequency band of the dual-polarized broadband antenna is the same as the frequency band of the wideband.

Optionally, the sharing apparatus 702 may further include:
a second setting module, configured to set a receiving unit of a tower mounted amplifier to the wideband frequency receiving, where the wideband frequency includes the receive frequency bands of the DBB FDD system and the GSM system.

Optionally, the sharing apparatus 702 may further include:
an executing module, configured to combine the frequencies of the DBB FDD system and the GSM system by using a system filter diplexer in the tower mounted amplifier.

Optionally, the sharing apparatus 702 may further include:
a third setting module, configured to set a radio frequency jumper interface respectively on a first base station and a second base station where the DBB FDD system and the GSM system coexist, where the radio frequency jumper interface of the first base station is configured to connect to the second base station and the radio frequency jumper interface of the second base station is configured to connect to the first base station; and
a branching module, configured to split a branch from the receive branches of the first base station, and connect the branch to the radio frequency jumper interface by using a dual-polarized broadband antenna; and

the sharing apparatus 702 is further configured to receive downlink signals of the DBB FDD system and the GSM system by using the dual-polarized broadband antennas inside the first base station and the second base station, where frequency bands of the dual-polarized broadband antennas are the same as the frequency band of the wideband frequency.

The apparatuses for sharing radio frequency receiving unit in the preceding embodiments may be combined into the system for sharing radio frequency receiving unit described in this embodiment.

It should be noted that because the methods and apparatuses for sharing radio frequency receiving unit have been described in detail in the preceding embodiments, for details about the system for sharing radio frequency receiving unit, refer to preceding description about the methods and the apparatuses for sharing radio frequency receiving unit; and therefore the system is not described in detail here.

In this specification, relational terms such as "first" and "second" are used only to differentiate an entity or operation from another entity or operation, which do not require or imply any actual relationship or sequence between these entities or operations. Furthermore, the terms such as "including", "comprising" or any other variant thereof are intended to cover a non-exclusive inclusion, so that a process, a method, an article or an equipment including a series of elements includes not only these elements but also other unspecified elements or also includes inherent elements of this process, method, article or equipment. If no more limitations are imposed, an element limited by "including" or "comprising" indicates that other same elements may also exist in the process, method, article or equipment that includes the element.

The preceding descriptions are a method, an apparatus and a system for sharing radio frequency receiving unit provided in the embodiments of the present invention. Although the principle and implementation mode of the invention are described through some exemplary embodiments, the embodiments are only intended to help understand the method and idea of the present invention. It is apparent that a person skilled in the art can make various modifications and variations to the invention without departing from the idea and scope of the invention. In conclusion, the specification shall not be construed as a limitation to the present invention.

## Claims

1. A method for sharing radio frequency receiving unit, comprising:
setting receive frequency band of radio frequency receiving unit of a DBB FDD system and a GSM system to a wideband frequency receiving, wherein the wideband frequency covers the receive frequency bands of the DBB FDD system and the GSM900 system; and
receiving signals of both the DBB FDD system and the GSM900 system using a dual-polarized broadband antenna inside a base station, wherein a frequency band of the dual-polarized broadband antenna is the same as the frequency band of the wideband frequency.

2. The method of claim 1, wherein the base station is configured with a tower mounted amplifier, and the method further comprises:
setting a receiving unit of the tower mounted amplifier to the wideband frequency receiving, wherein the wideband frequency comprises the receive frequency bands of the DBB FDD system and the GSM900 system.

3. The method of claim 2, further comprising:
combining frequencies of the DBB FDD system and the GSM900 system by using a system filter diplexer in the tower mounted amplifier.

4. The method of claim 1, further comprising:
setting a radio frequency jumper interface respectively on a first base station and a second base station wherein the DDB FDD system and the GSM900 system coexist, wherein the radio frequency jumper interface of the first base station is configured to connect to a receive jumper interface of the second base station and the radio frequency jumper interface of the second base station is configured to connect to a receive jumper interface of the first base station; and
splitting a branch from receive branches on the first base station, and connecting the branch to the radio frequency jumper interface by using a dual-polarized broadband antenna;
wherein the receiving downlink signals of the DBB FDD system and the GSM900 system by using the dual-polarized broadband antenna inside the base station additionally comprises:
receiving the downlink signals of the DBB FDD system and the GSM900 system by using respective dual-polarized broadband antennas inside the first base station and the second base station.

5. The method of claim 4, wherein an attenuator is configured on the receive branches of the first base station and the second base station, wherein the attenuator is configured to compensate a gain balance of the receive branches of the first base station and the second base station.

6. The method of claim 1, wherein the DDB FDD system comprises a GSM system, a CDMA system, a UMTS system, or an LTE system.

7. An apparatus for sharing radio frequency receiving unit, comprising:
a first setting module, configured to set receive frequency band of radio frequency receiving unit of a DBB FDD system and a GSM system to a wideband frequency receiving, wherein a frequency band of the wideband frequency covers the receive frequency bands of the DBB FDD system and the GSM system; and
a receiving module, configured to receive signals of both the DBB FDD system and the GSM system using a dual-polarized broadband antenna inside a base station, wherein a frequency band of the dual-polarized broadband antenna is the same as the frequency band of the wideband.

8. The apparatus of claim 7, further comprising:
a second setting module, configured to set a receiving unit of a tower mounted amplifier to the wideband frequency receiving, wherein the wideband frequency comprises the receive frequency bands of the DBB FDD system and the GSM system.

9. The apparatus of claim 8, further comprising:
an executing module, configured to combine frequencies of the DBB FDD system and the GSM system by using a system filter diplexer in the tower mounted amplifier.

10. The apparatus of claim 7, further comprising:
a third setting module, configured to set a radio frequency jumper interface respectively on a first base station and a second base station wherein the DBB FDD system and the GSM system coexist, wherein the radio frequency jumper interface of the first base station is configured to connect to a receive jumper interface of the second base station and the radio frequency jumper interface of the second base station is configured to connect to a receive jumper interface of the first base station;
a branching module, configured to split a branch from receive branches on the first base station, and connect the branch to the radio frequency jumper interface by using a dual-polarized broadband antenna; and
the receiving module, configured additionally to receive downlink signals of the DBB FDD system and the GSM system by using respective dual-polarized broadband antennas inside the first base station and the second base station, wherein frequency bands of the dual-polarized broadband antennas are the same as the frequency band of the wideband frequency.

11. The apparatus of claim 7, further comprising:
an attenuator setting module, configured to set an attenuator on the receive branches on the first base station and the second base station, wherein the attenuator is configured to compensate a gain balance of the receive branches of the first base station and the second base station.

12. A system for sharing radio frequency receiving unit, comprising:
a sending apparatus, configured to send signals of a DBB FDD system and a GSM system to a sharing apparatus; and
the sharing apparatus is configured to set receive frequency band of radio frequency receiving unit of the DBB FDD system and the GSM system to a wideband frequency receiving, wherein a frequency band of the wideband frequency covers the receive frequency bands of the DBB FDD system and the GSM system; and receive both the signals using a dual-polarized broadband antenna inside a base station, wherein a frequency band of the dual-polarized broadband antenna is the same as the frequency band of the wideband.

13. The system of claim 12, wherein the sharing apparatus further comprises:
a second setting module, configured to set a receiving unit of a tower mounted amplifier to the wideband frequency receiving, wherein the wideband frequency comprises the receive frequency bands of the DBB FDD system and the GSM system.

14. The system of claim 13, wherein the sharing apparatus further comprises:
an executing module, configured to combine frequencies of the DBB FDD system and the GSM system by using a system filter diplexer in the tower mounted amplifier.

15. The system of claim 12, wherein the sharing apparatus further comprises:
a third setting module, configured to set a radio frequency jumper interface respectively on a first base station and a second base station wherein the DBB FDD system and the GSM system coexist, wherein the radio frequency jumper interface of the first base station is configured to connect to the second base station and the radio frequency jumper interface of the second base station is configured to connect to the first base station; and
a branching module, configured to split a branch from receive branches on the first base station, and connect the branch to the radio frequency jumper interface by using a dual-polarized broadband antenna; and
the sharing apparatus is further configured to receive downlink signals of the DBB FDD system and the GSM system by using respective dual-polarized broadband antennas inside the first base station and the second base station, wherein frequency bands of the dual-polarized broadband antennas are the same as the frequency band of the wideband frequency.
